(19)

Europäisches
Patentamt
European
Patent Office
Office européen
des brevets

(11) **EP 3 255 873 A1**

(12) **EUROPEAN PATENT APPLICATION**

(43) Date of publication:
   **13.12.2017 Bulletin 2017/50**

(51) Int Cl.:
   ***H04N 1/60*** *(2006.01)*

(21) Application number: **16305699.7**

(22) Date of filing: **10.06.2016**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(71) Applicant: **Thomson Licensing**<br>**92130 Issy-les-Moulineaux (FR)** | (72) Inventors:<br>• **STAUDER, Jurgen**<br>   **35576 Cesson-Sévigné (FR)**<br>• **ORHAND, Anita**<br>   **35576 Cesson-Sévigné (FR)**<br>• **MORVAN, Patrick**<br>   **35576 Cesson-Sévigné (FR)**<br><br>(74) Representative: **Browaeys, Jean-Philippe**<br>**TECHNICOLOR**<br>**1-5, rue Jeanne d'Arc**<br>**92130 Issy-les-Moulineaux (FR)** |

(54) **METHOD OF MAPPING SOURCE COLORS OF AN IMAGE USING A LUT HAVING INPUT COLORS OUTSIDE A SOURCE COLOR GAMUT**

(57)     According to this method, the mapping color LUT has input colors that sample not only a source color gamut (included in an input encoding color space in which inputs colors of this LUT are encoded) but at least a portion of the input encoding color space which is not included in the source color gamut. Preferably, this color LUT further includes output colors located outside the target color gamut. Accuracy of the mapping is improved, notably for source colors located near the boundary of the source color gamut.

Figure 8

**Description**

Technical Field

The invention relates to the mapping of source colors of an image from a source color gamut into a target color gamut.

Background Art

Gamut mapping of colors of an image has the goal that the mapped colors are inside of the color gamut of a target display device. A second goal is that the mapped colors make efficient and complete use of the color gamut of the target display device. In general, color gamut mapping can be applied to any color that is within a source color gamut in order to transform it such that it is included in a target color gamut. The source color gamut can be linked to an image capture device such as camera or scanner. It can be linked to a reference display device such as a proof view display device used to control the creation or color processing of images. It can also be linked to a predefined, virtual color gamut as defined for instance in a standard such as ITU-R BT.709.

Usually, a source color is encoded in color coordinates of an input encoding color space. For convenience, this input encoding color space is chosen such that at least the source color gamut can be expressed with color coordinates that are equal or greater than zero and that are smaller or equal to the ingherit range of the input color space. In this case holds that the gamut of the input color space includes the source color gamut. A color gamut of the input color space is defined as including colors with color coordinates that are equal or greater than zero and that are smaller or equal to the ingherit range of the input color space. In special cases, the source color gamut equals the input encoding color space, however, this invention addresses specifically the case where the input color space is larger than the source color gamut.

The target color gamut can be linked to a specific reproduction display device. It can be linked also to a predefined gamut for transmission, compression or storage purpose. For example, it can be linked to a predefined, virtual color gamut as defined for instance in a standard such as ITU-R BT.2020. It can be linked to a specific medium such as film or paper prints. In the following we will simplify by talking about a source display device having a source color gamut and a target display device having a target color gamut.

Usually, a target color is encoded in color coordinates of an output encoding color space. For convenience, this output color space is chosen such that at least the target color gamut can be expressed with color coordinates that are equal or greater than zero and that are smaller or equal to the ingherit range of the output color space. In this case holds that the gamut of the output color space includes the target color gamut. The gamut of the output color space is defined as including colors with color coordinates that are equal or greater than zero and that are smaller or equal to the ingherit range of the output color space. In special cases, the target color gamut equals the color gamut of the output color space. This invention addresses this case with a specific variant. However, this invention addresses also the case where the color gamut of the output color space is larger than the target color gamut.

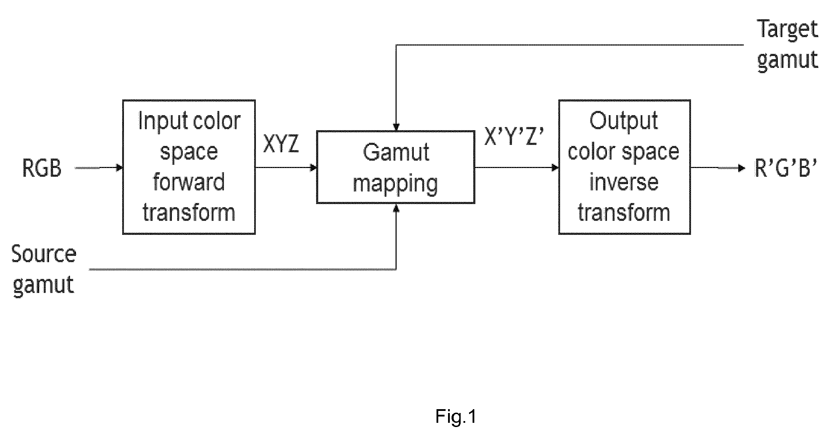

Figure 1 illustrates a classical workflow of color mapping colors of an image from a source color gamut towards a target color gamut. It means that any source color that is represented by input color coordinates R,G,B in an input encoding color space - here, input RGB - is mapped into a target color represented by its corresponding pre-calculated output color coordinates R',G',B' in an output encoding color space. Color coordinates R,G,B represent a color encoded an input encoding color space. Color coordinates R',G',B' represent a color encoded an output encoding color space.

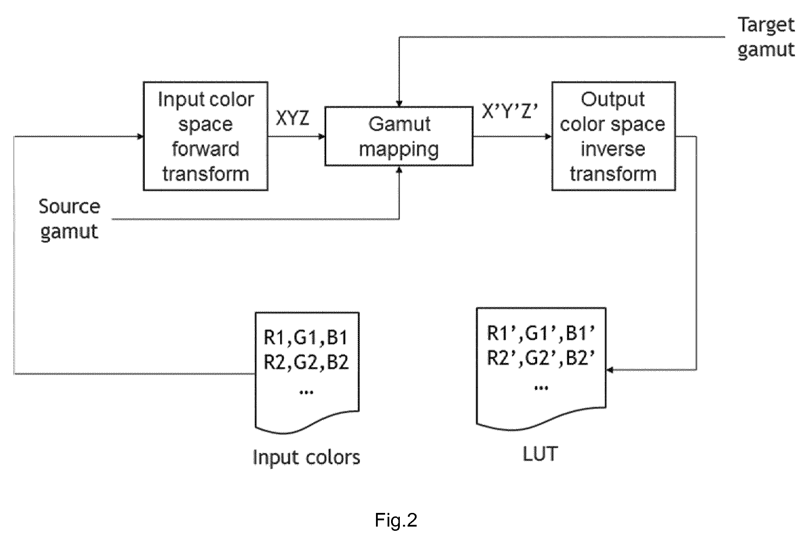

It is well known to implement such a color mapping by applying a color look-up-table (LUT) to source colors of an image to map. A color LUT consists of a list of pre-calculated output color coordinates R'G'B' that correspond to a set of input color coordinates R,G,B. More generally, input color coordinates R,G,B of such a color LUT correspond to input colors of the LUT, and such output color coordinates R,G,B correspond to output colors of the LUT. As shown on figure 2, in order to precalculate a color LUT, input colors represented by color coordinates R1 G1 B1,R2G2B2, ... lying on a grid within the input encoding color space and located inside the source color gamut are passed through the gamut mapping workflow shown in figure 1 resulting into a set of output colors represented by R1'G1'B1', R2'G2'B2', ... within the output encoding color space and located inside the target color gamut.

Input colors that are chosen to calculate a color LUT generally samples regularly the source color gamut. This sampling is generally performed through a grid having nodes representing the source colors.

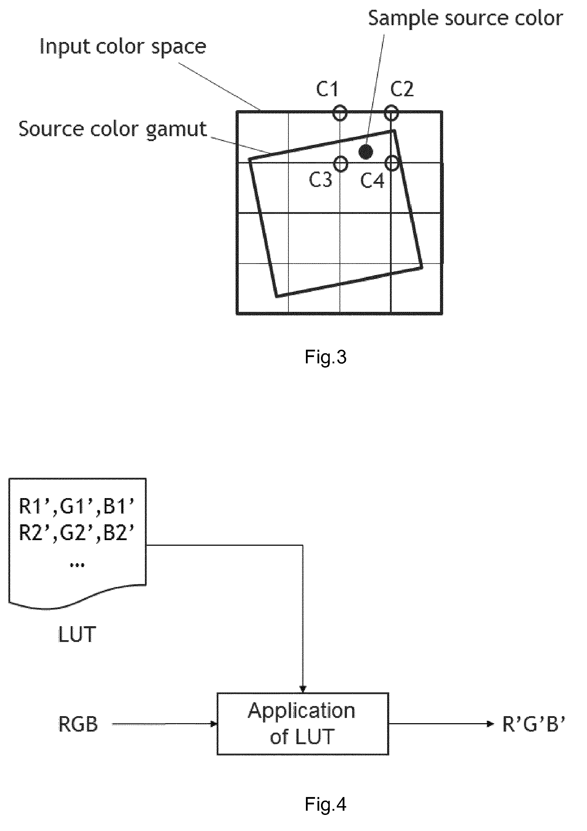

An example of a grid representing input colors of a color LUT sampling the source color gamut is illustrated on figure 3. For instance, input colors C3 and C4 can actually be passed through the gamut mapping workflow shown in figure 1 resulting into a set of mapped colors forming pre-calculated output colors of the color LUT - such as output colors C'3 and C'4 (not represented).

Using such a color LUT, the mapping of a source color to map which does not lye on a grid sampling the source color gamut should be interpolated in a manner known per se from the input and output colors of the LUT. Generally, a fixed number of input colors of the LUT lying on the positions of the grid within the input encoding color space which are the closest to the source color to map are selected, and the mapped target color is interpolated in a manner known per se from the corresponding output colors of the LUT. Known interpolation methods include trilinear and tetrahedral interpolation, using 3 and 4 closest colors on the grid, respectively, such as explained by Amidror in his paper entitled "Scattered data interpolation methods for electronic imaging systems: a survey" published in Electronic Imaging, Vol. 11.2 in 2002.

Figure 4 illustrates the interpolation of the color coordinates R', G', B' of a mapped target color from the color coordinates R'1, G'1, B'1 ; R'2, G'2, B'2 ; ... ; of output colors of a color LUT corresponding to input colors of this LUT selected as the closest to the source color to map, the interpolation processes being controlled by the color coordinates R, G, B of a source color to map.

A problem raises when a source color to map is located in close proximity to the boundary of the source color gamut - as illustrated by the "sample source color" on figure 3 - and when this source color gamut is smaller than the input encoding color space - as shown on figure 3 too. In such a situation, it may happen that the required number of closest colors on the grid sampling the input encoding color space found around this source color to map may be inappropriate for a valid interpolation of the mapped target color. The reason is that among the closest colors that should be used for the interpolation, some colors may be outside the source color gamut - as colors C1 and C2 on figure 3 - and are then not available as input colors in the color LUT. Known interpolation methods using a required number of closest colors on the grid sampling the input color space cannot not be used if one or more of these closest colors are outside the source color gamut. The resulting number of available color lying on the grid may be too low (notably inferior to three or four).

In the 2D representation of figure 3 showing a source color to map C, only two closest input colors C3 and C4 lying on the grid can be found in the color LUT for the interpolation of the corresponding mapped target color. Colors C1 and C2 shown on the grid of figure 3 are indeed approximately as close to the source color C as inputs colors C3 and C4, but they cannot be used for interpolation of the target color, because they are not input colors of the LUT because they are outside the source color gamut. Being outside the source color gamut, these colors C1 and C2 usually cannot be passed through the gamut mapping workflow shown in figure 1 and are not used to precalculate the color LUT. In such a situation, the interpolation of the mapped target color cannot be precise enough.

Summary of invention

An object of the invention is to solve the above problem, notably by using a color LUT including input colors located outside the source color gamut. Preferably, this color LUT further include output colors located outside the target color gamut.

For this purpose, a subject of the invention is method of mapping source colors of an image represented in an input encoding color space into target colors represented in an output encoding color space, from a source color gamut in a target color gamut, said method comprising applying said mapping color LUT to source colors of said image, resulting into mapped colors, wherein said mapping color LUT has input colors that sample not only said source color gamut but at least a portion of said input encoding color space not included in said source color gamut.

In summary, according to this method, the mapping color LUT has input colors that sample not only a source color gamut (included in an input encoding color space in which inputs colors of this LUT are encoded) but at least a portion of the input encoding color space which is not included in the source color gamut.

Advantageously, accuracy of the mapping is improved, notably for source colors located near the boundary of the source color gamut.

For source colors to map which are not equal to any input color of the mapping color LUT, it is implicit that the application of the mapping color LUT includes an interpolation from a plurality of output colors of this mapping color LUT. Such an interpolation is well known in the art of application of color LUTs. It means that this interpolation is inherent to the application of the mapping color LUT.

Preferably, said portion of said input encoding color space is connex to said source color gamut. It means that the mapping color LUT includes input colors that are distributed outside but in neighborhood to the source color gamut, i.e. to its boundaries. Advantageously, the precision of the mapping of source colors located near the boundary of the source color gamut is improved.

Preferably, said method comprises applying a color extension operator to said mapped colors to get said target colors. It means that the mapped color that is obtained by the application of the mapping color LUT (including, if necessary, any interpolations from a plurality of output colors of this LUT) is further extended using this operator.

Preferably, said color extension operator is such that the application of said color extension operator to the surface obtained by the application of said mapping color LUT to said source color gamut results approximately in said target color gamut.

Preferably, said color extension operator is such that the application of said color extension operator to output colors of said mapping color LUT results in extended output colors, some of which are located outside said output encoding color space.

It means that the mapping color LUT results from a compression of an original color LUT and that the application of the color extension operator to the mapping color LUT results in this original color LUT.

A subject of the invention is also an image processing device configured for mapping source colors of an image represented in an input encoding color space into target colors represented in an output encoding color space, from a source color gamut in a target color gamut, and configured for applying a mapping color LUT to source colors of said image, resulting into mapped colors, wherein said mapping color LUT has input colors that sample not only said source color gamut but at least a portion of said input encoding color space not included in said source color gamut.

Preferably, the image processing device is also configured for applying a color extension operator to said mapped colors to get said target colors.

Preferably, said color extension operator is such that the application of said color extension operator to output colors of said mapping color LUT results in extended output colors, some of which are located outside said output encoding color space.

A subject of the invention is also an electronic device incorporating such an image processing device. Such an electronic device can be any device able to process images, for instance a camera, a smartphone or a tablet, a TV set, a set-top-box, or a gateway.

Preferably, this electronic device comprises also a module for receiving said image, said color mapping LUT and, when needed, said color extension operator.

A subject of the invention is also a computer program product comprising program code instructions to execute the steps of the mapping method above, when this program is executed by a processor.

A subject of the invention is also a method of mapping source colors of an image represented in an input encoding color space into target colors represented in an output encoding color space, from a source color gamut in a target color gamut, comprising:

- building an original color LUT such that each of its input colors corresponds to an output color defined by said mapping of said input color, wherein input colors of said original color LUT sample not only said source color gamut but *at least* a portion of said input encoding color space not included in said source color gamut, and wherein at least one output color of said original color LUT does not belong to said output encoding color space,
- applying a color compression operator to compress said original color LUT into a mapping color LUT such that each of its output colors belongs to said output encoding color space,
- applying said mapping color LUT to source colors of said image to get mapped colors,
- applying a color extension operator to said mapped colors to get said target colors, wherein said color extension operator is built as the inverse of said color compression operator.

Preferably, this method comprises transmitting said image, said mapping color LUT and said color extension operator before applying said mapping color LUT to source colors of said image.

Brief description of drawings

The invention will be more clearly understood on reading the description which follows, given by way of non-limiting example and with reference to the appended figures in which:

- Figure 1, already quoted, illustrates a classical workflow of color mapping colors of an image from a source color gamut towards a target color gamut;
- Figure 2, already quoted, illustrates a classical workflow of calculating output colors from input colors to build a mapping color LUT;
- Figure 3 illustrates a grid representing input colors of a color LUT sampling the source color gamut;
- Figure 4 illustrates the usual interpolation of the color coordinates R', G', B' of a mapped target color from the color coordinates R'1, G'1, B'1 ; R'2, G'2, B'2 ; ... ; of output colors of a color LUT corresponding to input colors of this LUT selected as the closest to the source color to map;
- Figure 5 illustrates a first situation (indexed as N on figure 8) of the embodiment illustrated on figure 8 in which all the output colors of an original color LUT are located inside the output encoding color space;
- Figure 6 illustrates a second situation (indexed as Y on figure 8) of the embodiment illustrated on figure 8 in which output colors of an original color LUT are located outside the output encoding color space;
- Figure 7 illustrates the third and fourth steps of the embodiment illustrated on figure 8 in the situation illustrated on figure 6;
- Figure 8 illustrates different steps of a preferred embodiment of the color mapping method of the invention, when steps 1 and 2 on one side, and steps 3 and 4 on the other side, can be implemented separately, as illustrated by the arrow having dotted lines.

Description of embodiments

It will be appreciated by those skilled in the art that flow charts presented herein represent conceptual views of illustrative circuitry embodying the invention. They may be substantially represented in computer readable media and so executed by a data processing device, whether or not such device is explicitly shown. The functions of the various elements shown in the figures may be provided through the use of hardware capable of executing software in association with appropriate software. Such hardware capable of executing such software generally uses processor, controller, digital signal processor ("DSP") hardware, read-only memory ("ROM") for storing software, random access memory ("RAM"), and non-volatile storage.

The invention, and notably the steps 3 and 4 of the method described below, may notably be implemented by any device capable of processing images, notably capable of implementing color gamut mapping of images. Therefore, the invention can be notably implemented in an image capture device such as a camera, an image display device such as a TV set, a monitor, a head mounted display, or a set top box or a gateway. The invention can also be implemented in a device comprising both an image capture display device and an image display device, such as a smartphone or a tablet. All such devices comprise hardware capable of executing software that can be adapted in a manner known per se to implement the invention.

**First embodiment:**

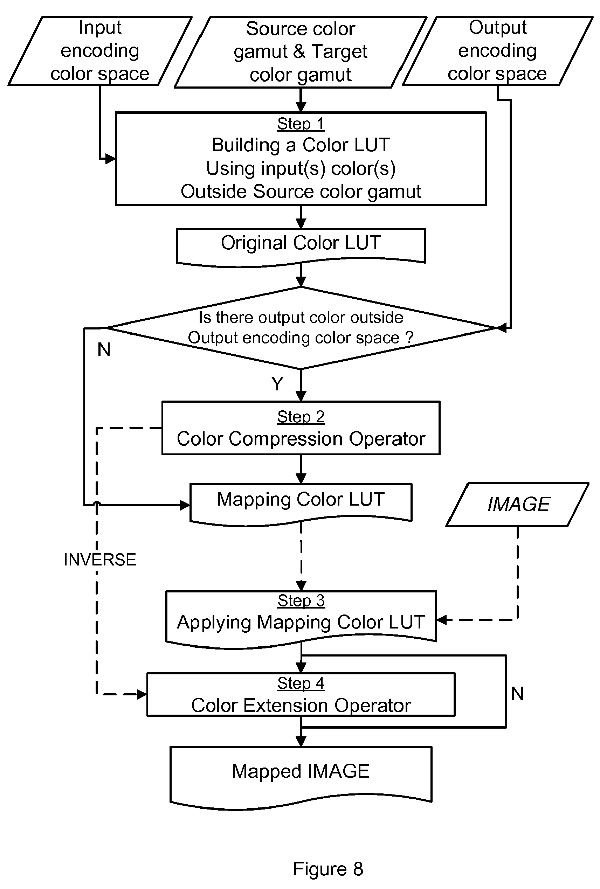

A first embodiment of the method of color mapping will now be described through four different steps in reference to figure 8 (step 1 to 4). It should be emphasized that some steps can be implemented separately: for instance steps 1 and 2 on the side of a server, and steps 3 and 4 on a consumer device adapted to process images ; dotted lines on figure 8 may notably represent a transmission step which is not detailed below, because such a transmission of images, of color LUT and of color extension operator is performed in a manner known per se.

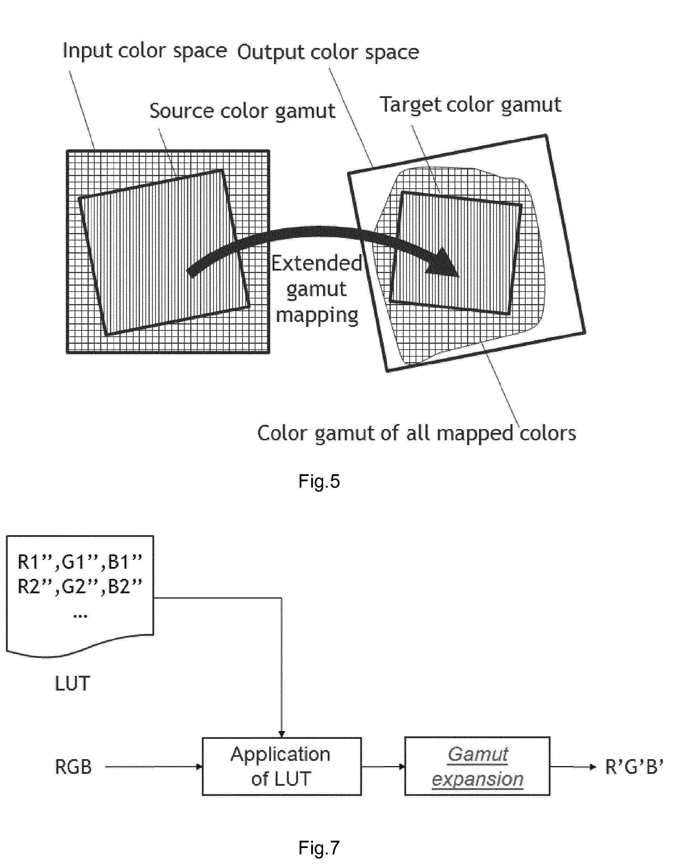

An input encoding color space is chosen such that the source color gamut is included in this input encoding color space. An output encoding color space is chosen such that the target color gamut is included in this output encoding color space as shown on figure 5.

The first and second steps below may be implemented for instance on the side of production of a video content on platforms that resize, encode, or generally reformat video content for specific distribution channels such as optical discs, broadcasting or cinema.

1st step: building an original color LUT using input(s) color(s) outside the source color gamut:

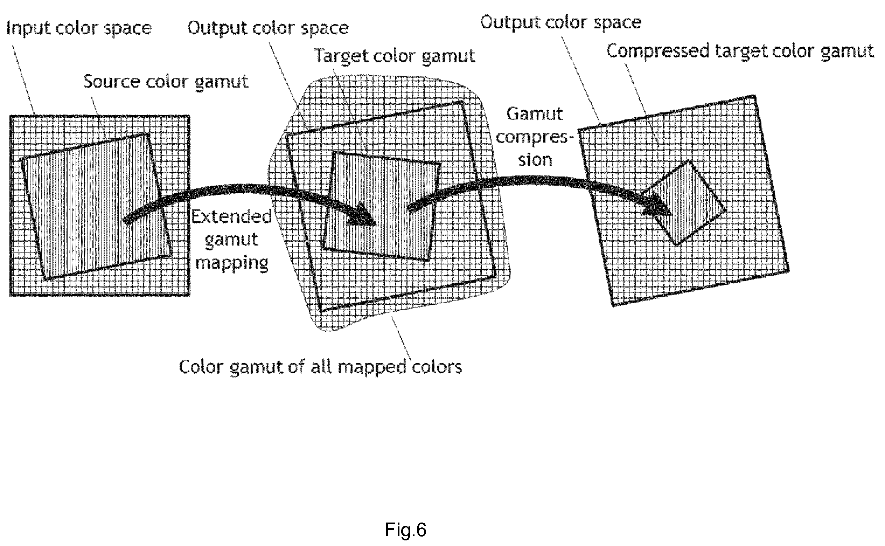

In this first step, from the source color gamut and the target color gamut, an original color LUT is built such as to be adapted to map colors from this source color gamut into the target color gamut. This original color LUT is precalculated as in the prior art, but instead of taking input colors sampling only the source color gamut for this precalculation, input colors are taken that sample at least a portion of the input encoding color space which is not included in the source color gamut. Preferably, this portion surrounds the source color gamut. Figure 5 and 6 illustrates a situation in which the whole input encoding color space is sampled by these input colors. It means that the input colors of the color LUT that is obtained extend beyond the boundary of the source color gamut.

Generally, through such a process, the input colors outside the source color gamut are mapped to output colors outside the target color gamut, as shown on figure 5 and 6. In a special case, contrary to what is shown on figure 5, output colors that are obtained may be distributed over the whole output encoding color space.

Having obtained this original color LUT, whether there is or there is no output color outside the output encoding color space, two situations are possible:

- a first situation (N on figure 8) in which all the output colors of the original color LUT are located inside the output encoding color space, as shown on figure 5; in this situation, the original color LUT can be considered as the mapping color LUT to be used in the 3$^{rd}$ step below.
- a second situation (Y on figure 8) in which at least one output color of the original color LUT is located outside the output encoding color space, as shown on figure 6 ; such "outside output colors" cannot be encoded, and then cannot be part of the LUT, and then cannot be used later on for an interpolation of a mapped color; in this situation, the original color LUT is compressed into a mapping color LUT as detailed in the 2$^{nd}$ step below.

2 nd step only in the second situation : color compression:

As shown on figure 6, in this situation, a color compression operator is applied to the original color LUT to get a mapping color LUT. The color compression operator is defined such that each of the output colors obtained after compression belongs to the output encoding color space. Therefore, all output colors of this compressed mapping color LUT can now be encoded in the output encoding color space. When applying this color compression operator to the target color gamut, a compressed target color gamut is obtained, as illustrated on figure 6.

Besides this color compression operation, a color extension operator is built in a manner known per se as the inverse of the color compression operator. This color extension operator will be used in the fourth step below.

The third and fourth steps below may be implemented for instance on the side of consumption of a video content, more precisely on a device capable of processing images, i.e. for instance on a consumer device such as TV set, a set-top-box, a tablet or any other consumer device mentioned above, or for instance on a professional device such as a video production platform that resize, encode, or generally reformat video content for specific distribution channels such as optical discs, broadcasting or cinema.

The mapping color LUT, the color extension operator and of course the image to map are provided to this device capable of processing images in a manner known per se, notably by transmission through any usual transmission network as a broadcast, a LAN or a WiFi network. Source colors defining the image is notably provided to such a device through color coordinates representing these source colors in the input encoding color space.

3rd step: applying the mapping color LUT:

In this third step, the mapping color LUT - resulting from the 1st or 2nd step above depending on the situation N or Y - is applied to source colors of the image to get mapped colors, including, when appropriate, any interpolation from different output colors of this LUT as in the prior art. Such an interpolation is considered as inherent to this third step.

In the first situation in which all output colors of the original LUT are located inside the output encoding color space after the first step (see figure 5), the mapped colors that are obtained form the final target colors (see the arrow bypassing step 4 on figure 8). Thanks to input colors of this LUT located outside the source color gamut, the problem of precision of color mapping interpolation for source color located near the boundary of the source color gamut is advantageously avoided.

4th step only in the second situation : color extension:

In the second situation in which a color compression operator has been applied in order to get all output colors of the LUT inside the output encoding color space as shown on figure 6, or to get more but not all output colors of the LUT inside the output encoding color space - not shown on figure 6 -, the color extension operator defined at the 2nd step above as the inverse of the color compression operator is applied to the mapped colors obtained at the 3rd step above in order to get the final target colors. Globally, the successive applications of the color compression operator, of the compressed mapping color LUT and of the color extension operator is approximately equivalent to the application of the original color LUT. Due to the interpolation inherent to the third step, it is possible that the result of these successive applications including inherent interpolation differs slightly to the direct application of the original color LUT including also inherent interpolation, notably because these inherent interpolations are not applied at the same level.

At the end of the above process, a color mapped image is obtained, in which even source colors located near the boundary of the source color gamut are precisely mapped into target colors.

**Second embodiment:**

A second embodiment of the invention will now be described. In this second embodiment, the source color gamut is defined by the D65 white point and the P3 primary colors specified in SMPTE RP 431-2:2011 "D-Cinema Quality - Reference Projector and Environment", in the following called P3 color gamut. The target color gamut is the color gamut according to ITU-R BT.709, in the following called BT.709 color gamut. The input encoding color space is chosen to be according to ITU-R BT.2020, in the following called BT.2020 color space.

1st step: building an original color LUT using input colors outside the P3 source color gamut:

In this first step, from the source color gamut and the target color gamut, an original color LUT is built such as to be adapted to map colors from the P3 color gamut into the BT.709 color gamut. This original color LUT is precalculated such as known in the prior art according to the following steps:

More specifically, this original Look Up Table is calculated using the perception-based gamut mapping operating in CIELAB color space, according to the following steps.

Input colors lying on a regular grid in the input color space - for example 9x9x9 - are selected, such that they have input color coordinates $R_iG_iB_i$ - for example i=0...9³-1 - in this input color space. These input color coordinates $R_iG_iB_i$ form the entries of the original Look Up Table. For a number of these input colors, the following steps are applied:
1. The linear input color coordinates $R_iG_iB_i$ are transformed into linear XYZ color coordinates $X_iY_iZ_i$ according to

$$\begin{pmatrix} X_i \\ Y_i \\ Z_i \end{pmatrix} = M_{RGB-to-XYZ} \begin{pmatrix} R_i \\ G_i \\ B_i \end{pmatrix}$$

where the matrix $M_{RGB\text{-}to\text{-}XYZ}$ is defined according to:

| | | |
|---|---|---|
| 0.636958 | 0.144617 | 0.168881 |
| 0.2627 | 0.677998 | 0.059302 |
| 0 | 0.028073 | 1.060985 |

2. The linear XYZ color coordinates $X_iY_iZ_i$ are transformed in a manner known per se into coordinates $L_ia_ib_i$ of CIELAB color space using D65 as white point.
Then, hue mapping modifies the hue of the colors of the input colors by mapping these coordinates $L_ia_ib_i$ into hue mapped coordinates $L'_ia'_ib'_i$. Hue is an aspect of colour that should generally be preserved during color gamut mapping. However, misalignment of hues of primary and secondary colors may lead to suboptimal behavior of succeeding steps of colour gamut mapping. In fact, non-uniform saturation modifications may occur when the primary colors defining the source colour gamut and the primary colors defining the target colour gamut are significantly mismatched. Hue mapping aims to improve the uniformity of the saturation modification induced by colour gamut mapping, notably to minimize the degradation of colour neighborhood while minimizing the average change of hue. Hue mapping adaptively changes the hue of a P3 primary color towards the hue of the corresponding BT.709 primary color based on the difference in hue and chroma of the P3 and BT.709 primary colors. Preferably, the hue change resulting from the color gamut mapping should be stronger when the difference of saturation between the P3 primary color and the corresponding BT.709 primary color is smaller. The following steps are carried out:

- For each primary color, a triangle is formed in a-b plane by the origin and the P3 and BT.709 primary colors, see an example in Figure 6. One angle of the triangle is the hue difference $\Delta h$.
- For each primary color, the difference between the two angles of the triangle opposed to $\Delta h$ is calculated and called $\Delta\alpha$. This difference expresses geometrically the difference of saturation of the P3 and BT.709 primary colors.
- For each primary color, the hue is changed by the offset $\Delta h \cos\frac{\Delta\alpha}{2}$. This offset is the stronger the smaller is the difference of saturation between the primary colors reflected by $\Delta\alpha$.
- For any color of the input signal to be mapped, an offset is applied to its hue that is interpolated from the offsets of the primary colors. The interpolation is bilinear in hue angles. After application of the offset, first mapped colors are obtained described by coordinates $L''_ia''_ib''_i$ of CIELAB color space.

Then a chroma mapping acts mainly on the chroma of the first mapped colors resulting into second mapped colors such that all second mapped colors are within the BT.709 color gamut. The following steps are carried out:

- For each first mapped color, straight mapping trajectory is determined including the first mapped color and an anchor point lying on the lightness L axis.

- Each first mapped colour is second mapped onto a second mapped colour defined by coordinates $L'''_ia'''_ib'''_i$ in direction to the anchor point along the mapping trajectory. The mapping of a first mapped colour can be described as a modification of the distance D of the first mapped colour from the anchor point into a distance D' of the second mapped colour from the same anchor point. In order to map D to D', a knee function is used having a first, linear segment having a slope of one covering 50% of the BT.709 chroma and a second, linear segment compressing all other colors within the BT.709 gamut:

$$D' = \begin{cases} D & if\ 0 < D \le D_{50\%} \\ D_{50\%} + \dfrac{(D - D_{50\%})(D_{709} - D_{50\%})}{(D_{max} - D_{50\%})} & if\ D_{50\%} < D \end{cases}$$

where

$D_{709}$ is the distance between the anchor point and the intersection of the mapping trajectory with the BT.709 color gamut,

$D_{50\%} = 0.5\ D_{709}$, and

$D_{max}$ is the distance between the anchor point and the intersection of the mapping trajectory with the input color gamut (either BT.2020 or P3).

It should be noted that first mapped colors with $D > D_{max}$ are mapped to second mapped colors with $D' > D_{709}$. This means that first mapped colors outside the P3 source color gamut are mapped to colors outside the BT.709 target color gamut.

To conclude the calculation of the original Look Up Table, the second mapped coordinates $L''_i a''_i b''_i$ are transformed into linear XYZ color coordinates $X'_i Y'_i Z'_i$ using D65 as white point, and the linear XYZ color coordinates $X'_i Y'_i Z'_i$ of a mapped color are transformed into linear BT.709 color coordinates $R'_i G'_i B'_i$ according to

$$\begin{pmatrix} R'_i \\ G'_i \\ B'_i \end{pmatrix} = M_{XYZ-to-RGB} \begin{pmatrix} X'_i \\ Y'_i \\ Z'_i \end{pmatrix}$$

where the matrix $M_{XYZ\text{-}to\text{-}RGB}$ is defined according to

| | | |
|---|---|---|
| 3.240970 | -1.537383 | -0.498611 |
| -0.969244 | 1.875968 | 0.041555 |
| 0.055630 | -0.203977 | 1.056972, |

these coordinates $R'_i G'_i B'_i$ being the output colors of the original Look Up Table.

It should be noted that for this look up table precalculation, instead of taking input colors sampling only the P3 color gamut for this precalculation, input colors are taken that sample the BT.2020 input encoding color space which is significantly larger than the P3 color gamut. In other words, there is a large portion of the BT.2020 input encoding color space which is not included in the P3 source color gamut. By this process, the input colors outside the P3 source color gamut are mapped to output colors outside the BT.709 target color gamut, as shown on figure 5 and 6.

Having obtained this original color LUT, whether there are output colors outside the output encoding color space, such as shown on figure 6; such "outside output colors" cannot be encoded, and then cannot be part of the LUT, and then cannot be used later on for an interpolation of a mapped color. Therefore, the original color LUT is compressed into a mapping color LUT as detailed in the 2nd step below.

2 nd step: color compression:

As shown on figure 6, a color compression operator is applied to the original color LUT to get a mapping color LUT. The color compression operator is defined such that each of the output colors obtained after compression belongs to the output encoding color space. Therefore, all output colors of this compressed mapping color LUT can now be encoded in the output encoding color space. When applying this color compression operator to the target color gamut, a compressed target color gamut is obtained, as illustrated on figure 6.

This compression operator is defined here to pre-scale the linear BT.709 color coordinates $R'_i G'_i B'_i$ obtained in the described 1st step resulting in prescaled, or compressed linear BT.709 color coordinates $R''_i G''_i B''_i$. Pre-scaling, or compression, handles color coordinates being out-of-range for those colors having been chroma mapped with a distance $D > D_{max}$ before chroma mapping. Prescaling of $R'_i$ color coordinates is done according to:

$$R''_i = \frac{1}{m_R}(R'_i - b_R)$$

$$b_R = \min_i R'_i \; and \; m_R = \left(\max_i R_i - \min_i R_i\right)$$

and equivalently for $G''_i$, $B''_i$. The prescaled, linear BT.709 color coordinates $R''_i G''_i B''_i$ build an entry of the mapping color LUT.

Besides this color compression operation, a color extension operator is built in a manner known per se as the inverse of the color compression operator. This color extension operator will be used in the fourth step below.

3rd step : applying the mapping color LUT:

In this third step, the mapping color LUT - resulting from the 2$^{nd}$ step above - is applied to source colors of the image to get mapped colors, including, when appropriate, any interpolation from different output colors of this LUT as in the prior art.

Thanks to input colors of this LUT located outside the source color gamut, the problem of precision of color mapping interpolation for source color located near the boundary of the source color gamut is advantageously avoided.

4$^{th}$ step only in the second situation: color extension:

The color extension operator defined at the 2$^{nd}$ step above as the inverse of the color compression operator is applied to the mapped colors obtained at the 3$^{rd}$ step above in order to get the final target colors.

When $R_{LUT} G_{LUT} B_{LUT}$ are the color coordinates of the mapped colors of the 3$^{rd}$ step, the color extension operator is a linear post-scaling according to:

$$R_{709} = m_R R_{LUT} + b_R$$

$$G_{709} = m_G G_{LUT} + b_G$$

$$B_{709} = m_B B_{LUT} + b_B$$

resulting in color coordinates $R_{709} G_{709} B_{709}$ of the final BT.709 target colors.

Globally, the successive applications of the color compression operator, of the compressed mapping color LUT and of the color extension operator is equivalent in terms of color to the application of the original color LUT. However, due to any interpolation from different output colors of the LUT, slight differences may occur. To avoid $R_{709} G_{709} B_{709}$ coordinates corresponding to colors outside the BT.709 color gamut due to any interpolation, these color coordinates are clipped such that the clipped color coordinates correspond to colors within the B T.709 target color gamut.

At the end of the above process, a color mapped image is obtained, in which even source colors located near the boundary of the source color gamut are precisely mapped into target colors.

**Variant of second embodiment:**

The second embodiment described above may include the following variation. When applying a mapping color LUT in an BT.2020 input encoding color space to colors included within PR source color gamut that is smaller than BT.2020, some of the entries of the mapping color LUT may never be used. In this case it can be advantageous to apply an input compression operator and an input extension operator according to the following way:

Modification of the 1$^{st}$ step of the 2$^{nd}$ embodiment:

The modification is to apply additionally an input compression operator to the $R_i G_i B_i$ color coordinates before transformation into XYZ color space. The compression operator can be for example:

$$R''' = R/0.96875$$

$$G''' = G/0.96875$$

and R''' and G''', respectively, is used instead of R,G for transformation into XYZ color space. This results in a modified original color LUT. The 2nd step is not modified but leads no a modified color mapping LUT since input to the 2nd step is the modified original color LUT.

Modification of the 3rd step of the 2nd embodiment:

The modification is to apply additionally an input extension operator being the inverse of the described input compression operator to the color coordinates of the source colors of the image before application of the modified color mapping LUT according to

$$R'''' = 0.96875 \, R_{source \, color \, of \, image}$$

$$G'''' = 0.96875 \, G_{source \, color \, of \, image}$$

And then using R'''' and G'''' instead of the color coordinates of the source colors of the image.

The application of the input extension operator and the modified mapping color LUT gives approximately the same colors as not applying the input extension operator and applying the mapping color LUT. The advantage of the described variation is that the modified mapping color LUT has less unused entries than the mapping color LUT and finally the whole color mapping has a higher precision. For example, when LUTs of size 33x33x33 are used for mapping P3 source colors of images represented in BT.2020 input encoding color space, and if color coordinates of these images are normalized within the range [0,1], the red and green color coordinates never go beyond the value of 0.96875 . Therefore, it is advantageous to use this value in the input extension and input compression operators.

Other types of input extension and input compression operators are possible that use non-linear terms such as for example

$$R''' = R^2/0.96875$$

or cross color channel terms such as for example

$$R''' = R \, G \, / \, 0.96875.$$

Although the illustrative embodiment of the invention has been described herein with reference to the accompanying drawings, it is to be understood that the present invention is not limited to this precise embodiment, and that various changes and modifications may be effected therein by one of ordinary skill in the pertinent art without departing from the invention, notably when implementing separately steps 3 and 4 of the above embodiment. All such changes and modifications are intended to be included within the scope of the present invention as set forth in the appended claims. The present invention as claimed therefore includes variations from the preferred embodiment described herein, as will be apparent to one of skill in the art.

While some of the specific embodiments may be described and claimed separately, it is understood that the various features of embodiments described and claimed herein may be used in combination.

**Claims**

1. Method of mapping source colors of an image represented in an input encoding color space into target colors represented in an output encoding color space, from a source color gamut in a target color gamut, said method comprising applying said mapping color LUT to source colors of said image, resulting into mapped colors, wherein said mapping color LUT has input colors that sample not only said source color gamut but at least a portion of said input encoding color space not included in said source color gamut.

2. Method of mapping according to claim 1, wherein said portion of said input encoding color space is connex to said source color gamut.

3. Method of mapping according to claim 1 or 2, comprising applying a color extension operator to said mapped colors to get said target colors.

4. Method of mapping according to claim 3, wherein said color extension operator is such that the application of said color extension operator to the surface obtained by the application of said mapping color LUT to said source color gamut results approximately in said target color gamut.

5. Method of mapping according to claim 3 or 4, wherein said color extension operator is such that the application of said color extension operator to output colors of said mapping color LUT results in extended output colors, some of which are located outside said output encoding color space.

6. Image processing device configured for mapping source colors of an image represented in an input encoding color space into target colors represented in an output encoding color space, from a source color gamut in a target color gamut, and configured for applying a mapping color LUT to source colors of said image, resulting into mapped colors, wherein said mapping color LUT has input colors that sample not only said source color gamut but at least a portion of said input encoding color space not included in said source color gamut.

7. Image processing device according to claim 6 also configured for applying a color extension operator to said mapped colors to get said target colors.

8. Image processing device according to 7, wherein said color extension operator is such that the application of said color extension operator to output colors of said mapping color LUT results in extended output colors, some of which are located outside said output encoding color space.

9. Electronic device incorporating an image processing device according to any one of claim 5 to 8.

10. Electronic device according to claim 9 comprising also a module for receiving said image, said color mapping LUT and, when needed, said color extension operator.

11. Computer program product comprising program code instructions to execute the steps of the method according to any one of the claims 1 to 5, when this program is executed by a processor

12. Method of mapping source colors of an image represented in an input encoding color space into target colors represented in an output encoding color space, from a source color gamut in a target color gamut, comprising:

- building an original color LUT such that each of its input colors corresponds to an output color defined by said mapping of said input color, wherein input colors of said original color LUT sample not only said source color gamut but *at least* a portion of said input encoding color space not included in said source color gamut, and wherein at least one output color of said original color LUT does not belong to said output encoding color space,
- applying a color compression operator to compress said original color LUT into a mapping color LUT such that each of its output colors belongs to said output encoding color space,
- applying said mapping color LUT to source colors of said image to get mapped colors,
- applying a color extension operator to said mapped colors to get said target colors, wherein said color extension operator is built as the inverse of said color compression operator.

13. Method of mapping according to claim 12 comprising transmitting said image, said mapping color LUT and said color extension operator before applying said mapping color LUT to source colors of said image.

EP 3 255 873 A1

Fig.1

12

Fig.2

Input color space

Sample source color

Source color gamut

C1

C2

C3

C4

Fig.3

R1',G1',B1'
R2',G2',B2'
...

LUT

RGB → Application of LUT → R'G'B'

Fig.4

Input color space Output color space

Source color gamut   Target color gamut

Extended
gamut
mapping

Color gamut of all mapped colors

Fig.5

R1'',G1'',B1''
R2'',G2'',B2''
...

LUT

RGB ⟶ Application of LUT ⟶ *Gamut expansion* ⟶ R'G'B'

Fig.7

Fig.6

Figure 8

Europäisches
Patentamt

European
Patent Office

Office européen
des brevets

**EUROPEAN SEARCH REPORT**

Application Number

EP 16 30 5699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 887 636 A2 (THOMSON LICENSING [FR]) 24 June 2015 (2015-06-24) | 1,2,6, 9-13 | INV. H04N1/60 |
| Y | * abstract; figure all * * paragraphs [0009], [0017], [0021], [0041] * | 3-5,7,8 | |
| | ----- | | |
| Y | US 2016/155245 A1 (STAUDER JURGEN [FR] ET AL) 2 June 2016 (2016-06-02) * abstract; figure all * * paragraphs [0092] - [0098], [0006] * | 3-5,7,8 | |
| | ----- | | |
| A | WO 2015/097032 A1 (THOMSON LICENSING [FR]) 2 July 2015 (2015-07-02) * the whole document * | 1-13 | |
| | ----- | | |

TECHNICAL FIELDS
SEARCHED (IPC)

H04N

The present search report has been drawn up for all claims

| Place of search | Date of completion of the search | Examiner |
|---|---|---|
| The Hague | 25 November 2016 | Winne, Dominique |

EPO FORM 1503 03.82 (P04C01)

18

**EP 3 255 873 A1**

## ANNEX TO THE EUROPEAN SEARCH REPORT
## ON EUROPEAN PATENT APPLICATION NO.

EP 16 30 5699

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2016

| Patent document cited in search report | | Publication date | Patent family member(s) | | Publication date |
|---|---|---|---|---|---|
| EP 2887636 | A2 | 24-06-2015 | EP | 2887634 A1 | 24-06-2015 |
| | | | EP | 2887636 A2 | 24-06-2015 |
| | | | US | 2015179135 A1 | 25-06-2015 |
| US 2016155245 | A1 | 02-06-2016 | EP | 3026883 A1 | 01-06-2016 |
| | | | US | 2016155245 A1 | 02-06-2016 |
| WO 2015097032 | A1 | 02-07-2015 | EP | 2890107 A1 | 01-07-2015 |
| | | | EP | 3087725 A1 | 02-11-2016 |
| | | | US | 2016322024 A1 | 03-11-2016 |
| | | | WO | 2015097032 A1 | 02-07-2015 |

EPO FORM P0459

For more details about this annex : see Official Journal of the European Patent Office, No. 12/82

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Scattered data interpolation methods for electronic imaging systems: a survey. *Electronic Imaging,* 2002, vol. 11.2

- D-Cinema Quality - Reference Projector and Environment. *SMPTE RP 431-2:2011*